# EUROPÄISCHE PATENTANMELDUNG

(11) **EP 1 180 657 A2**
(43) Veröffentlichungstag der Anmeldung: **20.02.2002**
(21) Anmeldenummer: 01119319.0
(22) Anmeldetag: 10.08.2001
(51) Int. Cl.: F28D 20/00

(54) **Wärmespeicher in Form eines Schichtpufferspeichers**

(30) Priorität: 18.08.2000 DE 10040892
(71) Anmelder: Duda-Seelos, Gerald J., 86944 Unterdiessen (DE)
(72) Erfinder: Duda-Seelos, Gerald J., 86944 Unterdiessen (DE)
(74) Vertreter: Grättinger & Partner (GbR)

(57) **Zusammenfassung**

Ein Wärmespeicher in Form eines Schichtpufferspeichers, umfaßt einen Pufferspeicherbehälter (3) für ein flüssiges Speichermedium, ein in den Pufferspeicherbehälter eintretendes Zuströmrohr (11) und mindestens ein aus dem Pufferspeicherbehälter austretendes Abströmrohr (20, 21, 22), wobei das Zuströmrohr (11) mit einem Schichtungsrohr (17) verbunden ist, welches eine Mehrzahl von in das Pufferspeichervolumen mündende Austrittsöffnungen (18, 19) aufweist. Dabei ist das Schichtungsrohr (17) in seinem mindestens einen die Austrittsöffnungen (18, 19) aufweisenden Bereich gegenüber der Vertikalen geneigt.

## Beschreibung

Die vorliegende Erfindung betrifft einen Wärmespeicher in Form eines Schichtpufferspeichers, umfassend einen Pufferspeicherbehälter für ein flüssiges Speichermedium, ein in den Pufferspeicherbehälter eintretendes Zuströmrohr und mindestens ein aus dem Pufferspeicherbehälter austretendes Abströmrohr, wobei das Zuströmrohr mit einem Schichtungsrohr verbunden ist, welches eine Mehrzahl von auf unterschiedlicher Höhe in das Pufferspeichervolumen mündende Austrittsöffnungen aufweist.

Wärmespeicher der vorstehend angegebenen Art werden insbesondere in Verbindung mit Solaranlagen eingesetzt. Durch die Temperaturschichtung des flüssigen Speichermediums innerhalb des Pufferspeicherbehälters läßt sich den Umständen Rechnung tragen, daß einerseits diejenige Temperatur, mit welcher der Solarvorlauf den Sonnenkollektor verläßt, von den bestehenden Randbedingungen (Außentemperatur, Winkelstellung der Sonne zur Kollektorfläche, Bewölkungsgrad und dgl.) abhängt und daß des weiteren für unterschiedliche Anwendungen (insbesondere Brauchwasser und Raumheizung) unterschiedlich hohe Temperaturen benötigt werden.

Wärmespeicher der gattungsgemäßen Art sind beispielsweise bekannt aus der EP 0561032 B1 und der DE 29721887 U1. Des weiteren beschäftigen sich die DE 3835096 C2, DE 19548816 A1, DE 19608405 A1 und DE 20003852 U1 mit Wärmespeichern in Form von Schichtpufferspeichern, wobei die zuletzt genannte Druckschrift die verschiedenen Möglichkeiten, das flüssige Speichermedium entsprechend seiner jeweiligen Temperatur zu schichten, erläutert. Im Hinblick auf sog. "interne offene Leiteinrichtungen", wie sie bei einem Wärmespeicher der gattungsgemäßen Art vorgesehen sind, wird dabei ausgeführt, daß die temperaturrichtige Einschichtung - wenn überhaupt - nur bei einem bestimmten Durchfluß funktioniere; bei allen anderen Durchflüssen trete entweder das Wasser an der falschen Stelle durch die Austrittsöffnungen aus dem Schichtungsrohr aus, oder aber Speichermedium werde aus dem Pufferspeicherbehälter in das Schichtungsrohr angesaugt und dort mit dem einzuschichtenden Speichermedium vermischt.

Aus der DE 2751265 A1 ist ein Schichtpufferspeicher bekannt, bei dem an die Austrittsöffnungen des Schichtungsrohres stutzenartige Rohrabschnitte angeschlossen sind. Bei einem in dem Schichtungsrohr aufsteigenden Fluid sind jene stutzenartigen Rohrabschnitte schräg nach unten geneigt.

Gemäß der DE 29823740 U1 ist vorgesehen, daß das Schichtungsrohr eines Schichtpufferspeichers im Bereich der Austrittsöffnungen von tellerförmigen Strömungsleitblechen umgeben ist. Diese Strömungsleitbleche definieren Strömungsleitkanäle für aus dem Schichtungsrohr austretendes Fluid, die unter Erzwingung einer Strömungsumlenkung von mehr als 90° schräg nach unten geneigt sind.

Zielsetzung der vorliegenden Erfindung ist es, einen Wärmespeicher der eingangs angegebenen Art zu schaffen, der sich durch ein besonders gutes Einschichtungsverhalten des in den Pufferspeicherbehälter eingespeisten Speichermediums und somit durch einen hohen Anlagen- bzw. Speicher-Nutzungsgrad auszeichnet. Der Anlagen- bzw. Speicher-Nutzungsgrad zielt darauf ab, möglichst bald, der Reihe nach, bestimmte Teilvolumina des Speichers auf eine mindeste erforderliche Nutztemperatur (z.B. 40°C) zu bringen.

Eine anschließende, ebenfalls stufenweise Temperaturanhebung der einzelnen Hoch-Mittel-Niedertemperaturbereiche erlaubt dann die Überbrückung einer entsprechenden Anzahl fon "Schlechtwettertagen" ohne den Einsatz einer Nachheizeinrichtung.

Gelöst wird diese Aufgabe gemäß der vorliegenden Erfindung dadurch, daß das Schichtungsrohr in seinem mindestens einen die Austrittsöffnungen aufweisenden Bereich gegenüber der Vertikalen geneigt ist. Die Neigung des Schichtungsrohres gegenüber der Vertikalen ermöglicht besonders günstige Strömungsverhältnisse innerhalb des Schichtungsrohres; insbesondere lassen sich durch Turbulenzen im Bereich der Austrittsöffnungen erzeugte Vermischungseffekte reduzieren, was zu einer entsprechenden Steigerung der Effizienz des Wärmespeichers beiträgt. Denn durch eine bewußte, gezielte Neigung des Schichtungsrohres im Bereich der Austrittsöffnungen gegenüber der Vertikalen läßt sich erreichen, daß das in den Pufferspeicherbehälter eingespeiste Speichermedium entsprechend seinem hydrostatischen Auf- bzw. Abtrieb an einem von Austrittsöffnungen freien Teilbereich des Schichtungsrohres entlangströmt bis zu jener Austrittsöffnung, in deren Bereich die Temperatur des Speichermediums innerhalb des Pufferspeicherbehälters im wesentlichen der Temperatur des in diesen eingespeisten Speichermediums entspricht.

Der optimale Neigungswinkel des Schichtungsrohres gegenüber der Vertikalen hängt von verschiedenen Einflußgrößen ab, insbesondere von der Art des Speichermediums, dem mittleren Volumenstrom, den geometrischen Verhältnissen und den mittleren Temperaturverhältnissen. Für durchschnittliche Verhältnisse erweist sich als günstig, wenn das Schichtungsrohr in seinem mindestens einen geneigten Bereich mit der Vertikalen einen Winkel zwischen 15° und 45° einschließt.

Eine andere bevorzugte Weiterbildung der Erfindung zeichnet sich dadurch aus, daß das Zuströmrohr dergestalt an das Schichtungsrohr angeschlossen ist, daß dieses einen ein Steigrohr bildenden oberen Ast und einen ein Fallrohr bildenden unteren Ast aufweist. Ist in diesem Sinne das Zuströmrohr nicht endseitig an das Schichtungsrohr sondern vielmehr mehr oder weniger mittig an dieses angeschlossen, so ergeben sich im Mittel verkürzte Strömungswege des in den Pufferspeicherbehälter eingespeisten Speichermediums innerhalb des Schichtungsrohres. Dies resultiert in weiterhin verringerten hydromechanischen und thermodynamischen Verlusten.

Besonders bevorzugt sind dabei der obere und der untere Ast des Schichtungsrohres V-förmig zueinander angeordnet, wobei der Winkel, den die beiden Äste des Schichtungsrohres mit der Vertikalen einschließen, einander entsprechen können; letzteres ist jedoch nicht zwingend. Durch die V-förmige Anordnung der beiden Äste des Schichtungsrohres läßt sich bei durchschnittlich dimensionierten Pufferspeicherbehältern eine besonders günstige Neigung beider Äste des Schichtungsrohres gegenüber der Vertikalen bei kurzen Strömungswegen erreichen.

Bei der vorstehend erläuterten Weiterbildung des erfindungsgemäßen Wärmespeichers sind besonders bevorzugt die Austrittsöffnungen des Schichtungsrohres im Bereich der unteren Fallinie des oberen Astes und im Bereich der oberen Fallinie des unteren Astes des Schichtungsrohres angeordnet. Mit anderen Worten: Bevorzugt ist der obere Ast des Schichtungsrohres im Bereich seiner oberen Fallinie frei von Austrittsöffnungen, und der untere Ast des Schichtungsrohres ist im Bereich seiner unteren Steiglinie frei von Austrittsöffnungen. Hierdurch kann das in den Pufferspeicherbehälter eingespeiste Speichermedium in dem betreffenden Ast des Schichtungsrohres an dessen nicht von Austrittsöffnungen durchbrochener Innenwand entlangströmen, nämlich im Fallrohr entlang einer nicht durchbrochenen Rinne nach unten fließen bzw. im Steigrohr entlang einer nicht durchbrochenen Rinne aufsteigen. Da sich auf diese Weise die Turbulenzen innerhalb des Schichtungsrohres minimieren lassen, ergibt sich bei dieser Weiterbildung des erfindungsgemäßen Wärmespeichers ein besonders hoher Wirkungsgrad.

Eine wiederum andere bevorzugte Weiterbildung der Erfindung zeichnet sich dadurch aus, daß im Bereich des Anschlusses des Zuströmrohres an das Schichtungsrohr eine Beruhigungskammer vorgesehen ist. Diese Beruhigungskammer hat die Funktion einer Wirbelbremse und einer Thermosyphon-Weiche. Innerhalb der Beruhigungskammer wird die Strömungsgeschwindigkeit des durch das Zuströmrohr in den Pufferspeicherbehälter eingespeisten Speichermediums reduziert. Dabei erfolgt der Zustrom horizontal und begünstigt daher weder den thermischen Auf- noch den Abtrieb. Nur die relative Einströmtemperatur entscheidet über Auf- bzw. Abtrieb. Dies ist insbesondere günstig, wenn das Schichtungsrohr in dem vorstehend erläuterten Sinne einen oberen, als Steigrohr und einen unteren, als Fallrohr ausgeführten Ast umfaßt.

Die vorliegende Erfindung läßt sich mit Vorteil bereits bei solchen Wärmespeichern einsetzen, an deren Pufferspeicherbehälter nur ein einziges Abströmrohr angeschlossen ist. Im allgemeinen werden jedoch mindestens zwei auf einem unterschiedlichen Niveau aus dem Pufferspeicherbehälter austretende Abströmrohre vorgesehen sein, um die unterschiedlichen Temperaturniveaus innerhalb des Pufferspeicherbehälters nutzen zu können.

Gemäß einer wiederum anderen bevorzugten Weiterbildung der Erfindung ist der Pufferspeicherbehälter aus zwei Segmenten zusammengefügt, wobei zwischen den tragenden Mänteln der beiden Segmente ein Isolator angeordnet ist. Hierdurch wird der Wärmefluß innerhalb des (gewöhnlich aus Stahl bestehenden) tragenden Mantels, wie er bei konventionellen Wärmespeichern der gattungsgemäßen Art vorgesehen ist, unterbrochen. Der hierdurch stark reduzierte Wärmefluß von oben nach unten innerhalb des Mantels des Pufferspeicherbehälters resultiert wiederum in einer Steigerung des Wirkungsgrades. Der Isolator kann dabei Teil eines Trennelements sein, welches den Pufferspeicherbehälter in zwei weitgehend voneinander getrennte Teilbehälter unterteilt. Hierdurch läßt sich auch an der Grenzschicht zwischen Hochtemperatur- und Mitteltemperaturbereich des Wärmespeichers der Wärmeaustausch reduzieren. Trennelement und Isolator können dabei insbesondere plattenartig aufgebaut sein und aus Gummi bestehen.

Zum Strömungsausgleich weist das Trennelement zwischen Hoch- und Mitteltemperaturbereich einen Durchbruch mit mindest 10 cm Durchmesser auf.

Ist der Wärmespeicher in dem vorstehend genannten Sinne durch ein Trennelement in zwei Teilbehälter unterteilt, so ist das Volumen des oberen Teilbehälters bevorzugt geringer als das des unteren Teilbehälters. Hierdurch ergibt sich eine optimale Verteilung der einzelnen Teilvolumina des Pufferspeicherbehälters entsprechend den durchschnittlichen Erfordernissen. Zudem läßt sich durch eine entsprechend kleinere Dimensionierung des oberen Teilbehälters dessen Oberfläche möglichst klein halten, was zur Reduktion von Wärmeverlusten aus den oberen, als Hochtemperaturspeicher genutzten Teilbehälters beiträgt. In diesem Zusammenhang kann das obere Segment des Pufferspeicherbehälters insbesondere einen geringeren Durchmesser aufweisen als das untere Segment, wobei entsprechend der Durchmesserdifferenz zwischen oberem Segment und unterem Segment des Pufferspeicherbehälters das obere Segment von einer stärkeren äußeren Wärmedämmschicht umgeben sein kann als das untere Segment, so daß die Außenabmessungen des fertig montierten Wärmespeichers (einschl. äußerer Wärmedämmschicht) über die gesamte Höhe konstant ist.

Ist der erfindungsgemäße Wärmespeicher im Sinne der vorstehend erläuterten Weiterbildung durch ein Trennelement in zwei Teilbehälter unterteilt, so sind besonders bevorzugt mindestens drei Abströmrohre vorgesehen, von denen eines mit dem oberen Teilbehälter und mindestens zwei auf unterschiedlich hohem Niveau mit dem unteren Teilbehälter verbunden sind. Das Schichtungsrohr ist über entsprechende Austrittsöffnungen sowohl mit dem oberen Teilbehälter als auch mit dem unteren Teilbehälter des Pufferspeicherbehälters verbunden.

Schließlich kann der Wirkungsgrad des erfindungsgemäßen Wärmespeichers noch dadurch gesteigert werden, daß der Pufferspeicherbehälter auf der gesamten Innenseite eine Auskleidung mit einem geringen Wärmeleitvermögen aufweist. Eine derartige Auskleidung kann insbesondere aus einer Kunststoffinnenschale bzw. -beschichtung bestehen. Eine derartige Auskleidung vermindert den Wärmeaustausch zwischen den verschiedenen Temperaturbereichen des Pufferspeicherbehälters über dessen tragenden Mantel.

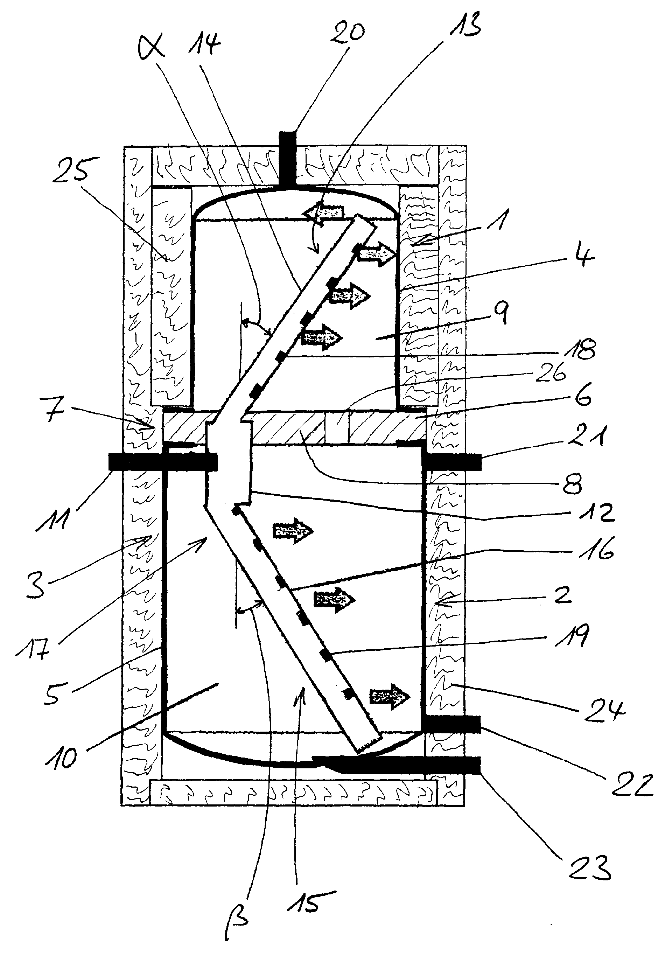

Im Folgenden wird die vorliegende Erfindung anhand eines in der Zeichnung veranschaulichten bevorzugten Ausführungsbeispiels näher erläutert.

Der in der Zeichnung in einem Vertikalschnitt veranschaulichte Schichtpufferspeicher umfaßt einen aus zwei Segmenten 1 und 2 bestehenden Pufferspeicherbehälter 3. Der tragende Mantel 4 des oberen Segments 1 und der tragende Mantel 5 des unteren Segments 2 des Pufferspeicherbehälters 3 sind über einen Isolator 6 mechanisch miteinander verbunden, jedoch thermisch voneinander getrennt. Der Isolator 6 ist dabei Teil eines plattenförmigen, aus Gummi bestehenden Trennelements 7, welches eine von dem ringförmigen Isolator 6 umschlossene Trennlage 8 umfaßt. Hierdurch entsteht ein oberer Teilbehälter 9 und ein unterer Teilbehälter 10 entsprechend dem oberen Segment 1 und dem unteren Segment 2 des Pufferspeicherbehälters 3. Die Trennlage 8 ist von einem Durchbruch 26 durchsetzt, welcher den unteren Teilbehälter 10 und den oberen Teilbehälter 9 zum Zwekke des Strömungsausgleichs hydraulisch miteinander verbindet.

In den Pufferspeicherbehälter 3 tritt ein Zuströmrohr 11 ein. Diese mündet in eine Beruhigungskammer 12, die ihrerseits mit einem als Steigrohr 13 ausgeführten oberen Ast 14 und mit einem als Fallrohr 15 ausgeführten unteren Ast 16 eines Schichtungsrohres 17 verbunden ist. Beide Äste 14 und 16 des Schichtungsrohres 17 weisen Ausströmöffnungen 18 bzw. 19 auf, durch welches das über das Zuströmrohr 11 in den Pufferspeicherbehälter 3 eingespeiste Speichermedium das Schichtungsrohr 17 in den oberen Teilbehälter 9 bzw. den unteren Teilbehälter 10 hinein verlassen kann.

Der obere Ast 14 des Schichtungsrohres 17 ist gegenüber der Vertikalen um den Winkel α geneigt. In entsprechender Weise ist der untere Ast 16 des Schichtungsrohres 17 gegenüber der Vertikalen um den Winkel β geneigt. Bei dem in der Zeichnung veranschaulichten Ausführungsbeispiel betragen die Winkel α und β 36° bzw. 32°. Die Ausströmöffnungen 18 des oberen Astes 14 des Schichtungsrohres 17 sind im Bereich der unteren Fallinie des Steigrohres 13 angeordnet. Demgegenüber befinden sich die Austrittsöffnungen 19 des unteren Astes 16 des Schichtungsrohres 17 im Bereich der oberen Fallinie des Fallrohres 15. Auf diese Weise kann das in dem Fallrohr absinkende Speichermedium entlang einer nicht durchbrochenen Rinne zu der geeigneten Ausströmöffnung 19 hinabströmen; und im Bereich des Steigrohres 13 kann Speichermedium entlang einer nicht durchbrochenen Rinne bis zu der geeigneten Ausströmöffnung 18 aufsteigen.

An den Pufferspeicherbehälter 3 sind insgesamt drei Abströmrohre angeschlossen, nämlich ein an den oberen Teilbehälter 9 angeschlossenes Abströmrohr 20 und zwei auf unterschiedlich hohem Niveau an den unteren Teilbehälter 10 angeschlossene Abströmrohre 21 und 22. Des weiteren mündet in den unteren Teilbehälter 10 ein Rücklauf 23 zum Anschluß weiterer Mittel- bzw. Niedertemperaturspeicher in Reihen oder Kaskadenschaltung: Speichererweiterung mittels beliebig vieler Speicher ähnlicher Bauart.

Der Pufferspeicherbehälter 3 ist über seinen gesamten Umfang von einer Wärmedämmschicht 24 umgeben. Indem das oberen Segment 1 des Pufferspeicherbehälters 3 einen geringeren Durchmesser aufweist als das untere Segment 2, ergibt sich Raum für eine zusätzliche Wärmedämmschicht 25 im Bereich des als Hochtemperaturspeicher dienenden oberen Teilbehälters 9.

Beide Teilbehälter 9 und 10 des Pufferspeicherbehälters 3 weisen eine - nicht dargestellte - Innenisolierung in Form einer Kunststoffinnenschale auf.

## Patentansprüche

1. Wärmespeicher in Form eines Schichtpufferspeichers, umfassend einen Pufferspeicherbehälter (3) für ein flüssiges Speichermedium, ein in den Pufferspeicherbehälter eintretendes Zuströmrohr (11) und mindestens ein aus dem Pufferspeicherbehälter austretendes Abströmrohr (20, 21, 22), wobei das Zuströmrohr (11) mit einem Schichtungsrohr (17) verbunden ist, welches eine Mehrzahl von in das Pufferspeichervolumen mündende Austrittsöffnungen (18, 19) aufweist,
**dadurch gekennzeichnet,**
**daß** das Schichtungsrohr (17) in seinem mindestens einen die Austrittsöffnungen (18, 19) aufweisenden Bereich gegenüber der Vertikalen geneigt ist.

2. Wärmespeicher nach Anspruch 1,
**dadurch gekennzeichnet,**
**daß** das Schichtungsrohr (17) in seinem mindestens einen geneigten Bereich mit der Vertikalen einen Winkel (α, β) zwischen 15° und 45° einschließt.

3. Wärmespeicher nach Anspruch 1 oder Anspruch 2,
**dadurch gekennzeichnet,**
**daß** das Zuströmrohr (11) dergestalt an das Schichtungsrohr (17) angeschlossen ist, daß dieses einen ein Steigrohr (13) bildenden oberen Ast (14) und einen ein Fallrohr (15) bildenden unteren Ast (16) aufweist.

4. Wärmespeicher nach Anspruch 3,
**dadurch gekennzeichnet**,
der obere (14) und der untere (16) Ast des Schichtungsrohres (17) V-förmig zueinander angeordnet sind.

5. Wärmespeicher nach Anspruch 3 oder Anspruch 4,
**dadurch gekennzeichnet,**
**daß** die Austrittsöffnungen (18, 19) im Bereich der unteren Fallinie des oberen Astes (14) und im Bereich der oberen Fallinie des unteren Astes (16) des Schichtungsrohres (17) angeordnet sind.

6. Wärmespeicher nach einem der Ansprüche 1 bis 5,
**dadurch gekennzeichnet,**
**daß** im Bereich des Anschlusses des Zuströmrohres (11) an das Schichtungsrohr (17) eine Beruhigungskammer (12) vorgesehen ist.

7. Wärmespeicher nach einem der Ansprüche 1 bis 6,
**dadurch gekennzeichnet,**
**daß** der Pufferspeicherbehälter (3) aus zwei Segmenten (1, 2) zusammengefügt ist, wobei zwischen den tragenden Mänteln (4, 5) der beiden Segmente ein Isolator (6) angeordnet ist.

8. Wärmespeicher nach Anspruch 7,
**dadurch gekennzeichnet,**
**daß** der Isolator (6) Teil eines Trennelements (7) ist, welches den Pufferspeicherbehälter (3) in zwei Teilbehälter (9, 10) unterteilt.

9. Wärmespeicher nach Anspruch 8,
**dadurch gekennzeichnet,**
**daß** das Volumen des oberen Teilbehälters (9) geringer ist als das Volumen des unteren Teilbehälters (10).

10. Wärmespeicher nach Anspruch 8 oder Anspruch 9,
**dadurch gekennzeichnet,**
**daß** mindestens drei Abströmrohre (20, 21, 22) vorgesehen sind, von denen eines (20) mit dem oberen Teilbehälter (9) und mindestens zwei (21, 22) auf unterschiedlich hohem Niveau mit dem unteren Teilbehälter (10) verbunden sind.

11. Wärmespeicher nach einem der Ansprüche 7 bis 10,
**dadurch gekennzeichnet,**
**daß** das obere Segment (1) des Pufferspeicherbehälters (3) einen geringeren Durchmesser aufweist als das untere Segment (2).

12. Wärmespeicher nach einem der Ansprüche 7 bis 11,
**dadurch gekennzeichnet,**
**daß** das obere Segment (1) des Pufferspeicherbehälters (3) von einer stärkeren äußeren Wärmedämmschicht (24, 25) umgeben ist als das untere Segment.

13. Wärmespeicher nach einem der Ansprüche 1 bis 12,
**dadurch gekennzeichnet,**
**daß** der Pufferspeicherbehälter (3) auf der gesamten Innenseite eine Auskleidung mit einem geringen Wärmeleitvermögen aufweist.

14. Wärmespeicher nach einem der Ansprüche 1 bis 13,
**dadurch gekennzeichnet,**
**daß** mindestens zwei auf einem unterschiedlichen Niveau aus dem Pufferspeicherbehälter (3) austretende Abströmrohre (20, 21, 22) vorgesehen sind.
